# EUROPEAN PATENT SPECIFICATION

(11) **EP 2 475 442 B1**
(45) Date of publication and mention of the grant of the patent: **05.03.2014**
(21) Application number: 10760026.4
(22) Date of filing: 31.08.2010
(51) Int. Cl.: C02F 1/06, B01D 1/16, B01D 1/26, B01D 1/28, B01D 3/06, C02F 103/08, B01D 1/30

(54) **MULTIPLE-EFFECT EVAPORATOR**
VERDAMPFER MIT MEHRFACHEFFEKT
ÉVAPORATEUR À EFFETS MULTIPLES

(30) Priority: 07.09.2009 IT RM20090452
(43) Date of publication of application: 18.07.2012
(73) Proprietor: Isproma S.r.l., 00193 Roma (IT)
(72) Inventor: CIGNA, Ranieri, I-00193 Roma (IT); FUMEI, Osvaldo, I-00193 Roma (IT)
(74) Representative: Fiammenghi-Domenighetti, Delfina
(86) International application number: PCT/IB2010/053906
(87) International publication number: WO 2011/027293

(56) References cited:
- EP-A1- 1 750 823
- WO-A1-01/72638
- WO-A1-2005/012184
- GB-A- 2 443 802
- JP-A- 2007 198 701
- US-A- 2 662 850
- US-A- 3 499 827
- US-B1- 6 309 513

## Description

### Field of the art

The present invention regards an evaporator of the type with multiple effects, with horizontal evaporation tube bundles. Such systems, having typical distillation function, are particularly used in the desalination of seawater with the goal of obtaining fresh water.

### Prior art

One such system is for example described in a report given at an international conference (M. Takada - Multi-Effect Stack Type (MES) Distilling Plant - 5th International Symposium on Fresh Water from the Sea, Vol. 2, 325-333, 1976). This discusses a pressurized distillation tower with several modular bodies, known as effects, substantially arranged with one on top of the other, whose functioning principle is known.

The water to be treated, fed by a delivery pump, after having been preheated through pre-heaters incorporated in the structure, is sprayed on the outer surfaces of the vaporizer tubes in the first effect, where a first portion is made to evaporate by means of steam (or another heating fluid), which is sent inside the vaporizer tubes from an external source (boiler).

The remaining water is collected at the bottom of the first effect and is then sprayed on the external surfaces of the vaporizer tubes in the second effect, where a further portion of the brine evaporates, it being heated with the vapor that was generated in the first effect and sent into the vaporizer tubes through a small drop separation baffle, having the function of retaining the drops suspended in the vapor. The vapor itself condenses into fresh water, which represents the product of the plant. The operating cycle described above is repeated in each effect up to the last. The vapor generated in the last effect condenses in a condenser. The effects are made to function at decreasing temperatures. This is obtained by maintaining the effects at successively lower pressures (i.e. with higher reduced pressure) by means of the abovementioned condenser and a suction ejector which expels the incondensable elements into the atmosphere while the condensate is recovered. The heat provided in the form of heating vapor in the first effect is repeatedly used for the evaporation in the subsequent effects. In such a manner, with minimum heat consumption, a maximum amount of fresh water can be produced. Multiple-effect distillation plants, with considerable production capacities, comprised between 500 and 10000 tons of fresh water per day, can be made by flanking two towers like that described above (see preceding M. Takada mention), in which the distillation process is carried out due to the alternating passage of the vapor in the effects of one tower and the other. Plants constituted by only one tower, hence easy to transport and install, have in any case rather high production capacities.

The attempts undertaken up to now for obtaining multiple-effect evaporation plants for small production have consisted of the scale reduction of the size of the plant to only one above-described tower. Such size reduction has in any case encountered two limitations:
- It is impossible to reduce the cross section of the effects within a certain limit, due to the size of the vapor passage channels and distillate collection channels, which in the prior art are situated inside the external jacket or casing of the evaporator;
- It is impossible to overly reduce the overall size of the effect in order to facilitate operators' access to its interior, both for mounting the plant and for its maintenance and cleaning.

The presence of the various members inside a single central body of the evaporator, without the possibility to extend outside some members, makes the internal coating (commonly neoprene) operation extremely difficult, as well as maintenance and manufacture. The neoprene application operation requires access to every part of the effect.

### Summary of the invention

The object of the invention is that of remedying the aforesaid drawbacks by proposing a structural design suitable for the small-medium production field, in which all the parts of the evaporator, substantially except for the tube bundles and the drop separators, are externally arranged, and in which access openings are provided for the maintenance and the extraction of some parts of the evaporator, for example holes/portholes or outlets of manual extraction of the perforated plates and drop separator filters or their sections. Extraction means can also be provided for, for example sliding means or the like, such as a laterally extractible drawer for facilitating the lateral extraction of said parts. In such a manner, the operator does not have to physically enter into the single module/effect, but can operate by simply inserting his arm in the module (effect) and replacing the parts to be substituted and repaired on the slidable drawer with lateral extraction.

The advantages obtained by means of the present invention substantially consist of:
- economy of construction and mounting due not only to the lightening of the main body of the evaporator but also to the simplification of the internal members and to the use, for the components borne externally (pre-heaters, transfer ducts of the vapor between two contiguous effects, etc.), of tube elements of joined type;
- ease of access for cleaning and maintenance;
- easy substitution of the components situated in these external tubes (e.g. the tube bundle of the pre-heaters, etc.);
- further economies of construction deriving from the simplicity of the design of the interiors of the various effects, with the consequent possibility of use of low cost materials.

In addition, the alternating eccentric arrangement of the evaporation tube bundles of the effects with respect to the vertical plane of the evaporation tower, and the alternating arrangement of the (external) pre-heaters, alternating on different sides of the multiple-effect evaporator itself, allows considerably reducing the height of the latter given the same production capacity (and performance, defined as the ratio between the quantity of fresh water produced and every ton of heating vapor consumed).

"US 3,499,827 discloses a distillation plant including a vertical stack of effects.

Seawater is fed and distributed over horizontal vapour tubes by a distributor plate located completely inside each effect. The seawater falls by gravity on the vapour tubes. Vapour produced in one effect is conducted to the vapour tubes of the next effect.

In this construction the (horizontal) pre-heaters of the supplied seawater lie within the central housing or shell, inside respective condensate chambers used for collecting the product (condensate), as shown in Fig. 4 of US 3,499,827. Also the paths of the vapour from one effect to the next (see Fig. 1 of US 3,499,827) are within the housing of the plant.

A replacement or cleaning of parts of the plant is thus rendered more difficult because they are not easily accessible. Further, in contrast with the present invention the liquid flow (of increasingly concentrated seawater) between effects makes use of conduits (17), external manifolds (18), and finally of valves (19) in order to preserve the desired pressure differential between effects. Though pumps are eliminated to achieve this, and though the height of the plant is limited, the number of components could still be further reduced together with the elimination of many maintenance and cleaning problems due to difficult accessibility to the components, as shown by the present invention."

### Brief description of the drawings

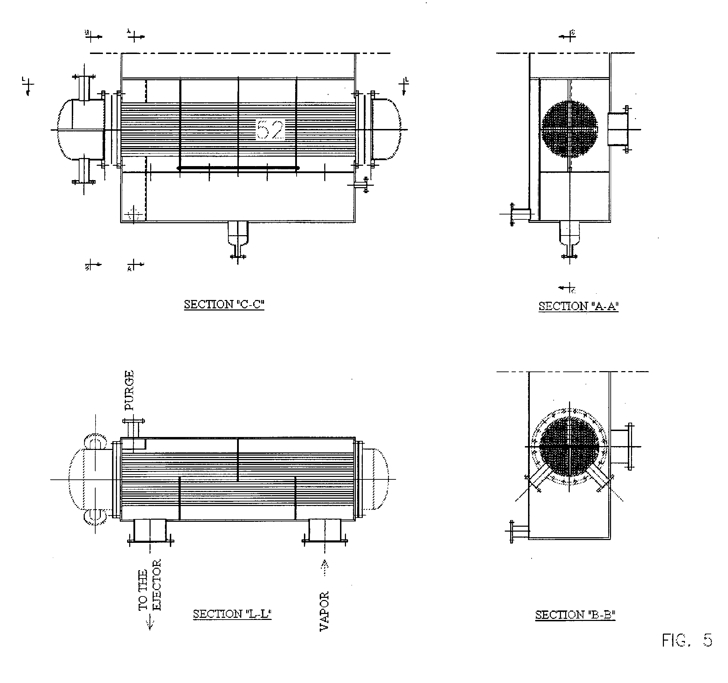

The present invention will now be described as merely exemplifying and non-limiting by making reference to several preferred embodiments thereof illustrated in the drawings, in which:
FIGURE 1 is a flow diagram of the evaporator of the present invention;
FIGURE 2 represents the view from the "east" of the evaporation tower, or superimposed multiple-effect evaporator, according to the present invention; as well as various views related to
   - the effects 1.1 up to 1.4 shown separately (of course, the number 4 is only exemplifying);
   - the condenser, also shown separately; and
   - the external casing (external jacket);
FIGURE 3 on the left shows the view from the "west" of the multiple-effect evaporator, at the center the view from the "south", and on the right its view from the "north";
FIGURE 4 shows
   - 4a) the condenser, seen from the "south";
   - 4b) the condenser, seen from the "north";
   - 4c) the condenser, plan view;
   - 4d) the condenser, seen from the "east";
   - 4e) the condenser, seen from the "west";
FIGURE 5 shows the condenser in partial section according to various views, in order to be able to see the internal tube bundles;
FIGURE 6 shows several details of the tube bundles of the condenser, the flanges, the gaskets and the expansion locking of the tubes in the end plates;
FIGURE 7 illustrates:
   - below, from left to right, the pre-heaters (3.1, 3.2, 3.3), and respectively in section;
   - at the center, the respective plan views;
   - above, the plan and side views of flanges, tube bundles, gaskets and baffles;
FIGURE 8 comprises various views of the central body of the multiple-effect evaporator according to the present invention, i.e. excluding the pre-heaters, the transfer passages or tubes of the vapor from one effect to the other, the various loop seals, the supply seawater ducts, and still others, in which from left to right the following appear in succession:
   - the view of the central body from the "east",
   - its view from the "west",
   - its view from the "south";
   - its view from the "north";
FIGURE 9 presents various views of the first effect, or upper effect (1.1);
FIGURE 10 shows various sections of the first effect (1.1);
FIGURE 11 represents different details of the first effect (1.1), i.e.:
   the tube bundle (8) with the first step (lower) and the second step (upper), the expansion mounting method of the single tubes of the evaporation tube bundle (8) in the first effect (1.1), the perforated plate on the "floor" of the first effect (and on that of the successive effects 1.2, 1.3), and its method for mounting to the flange;

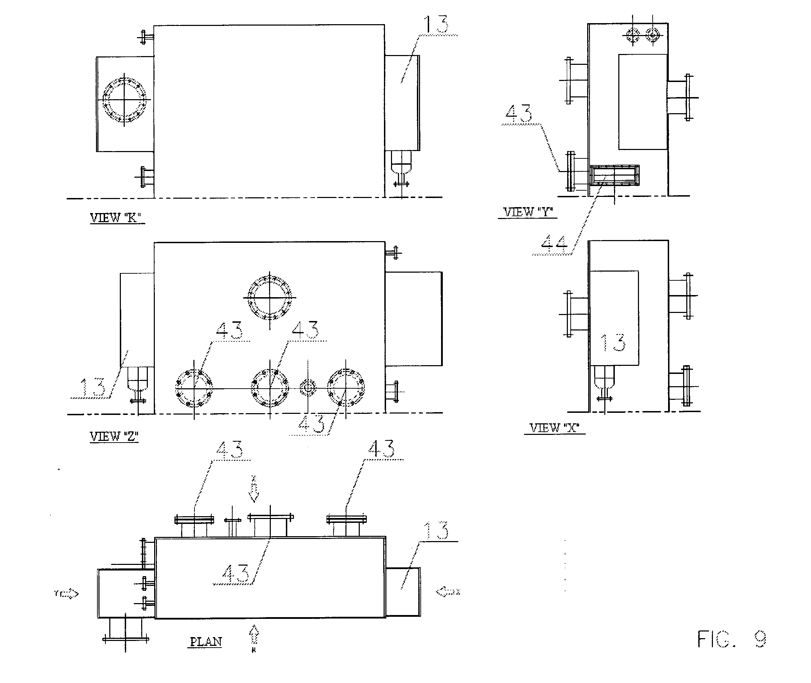

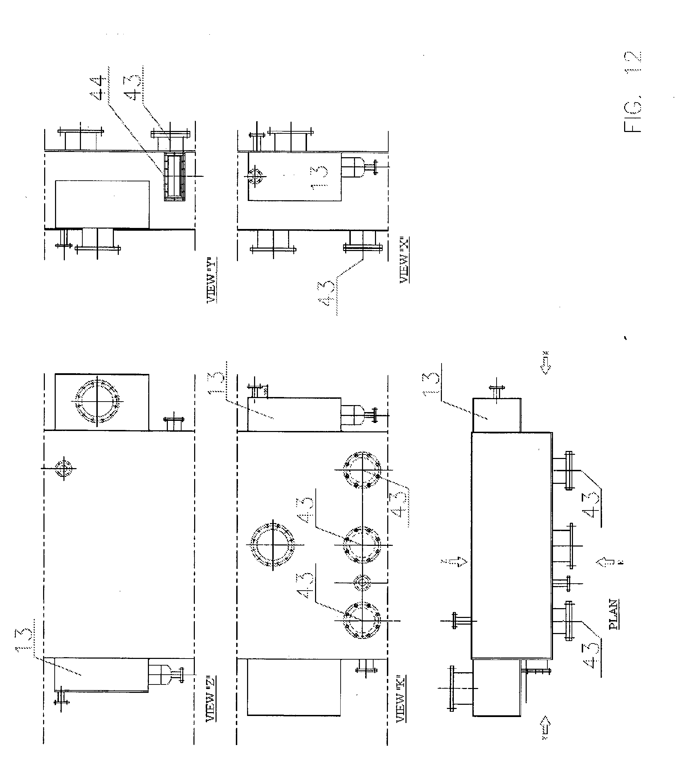

FIGURE 12 shows views analogous to the views of Fig. 9, for the second effect (1.2);

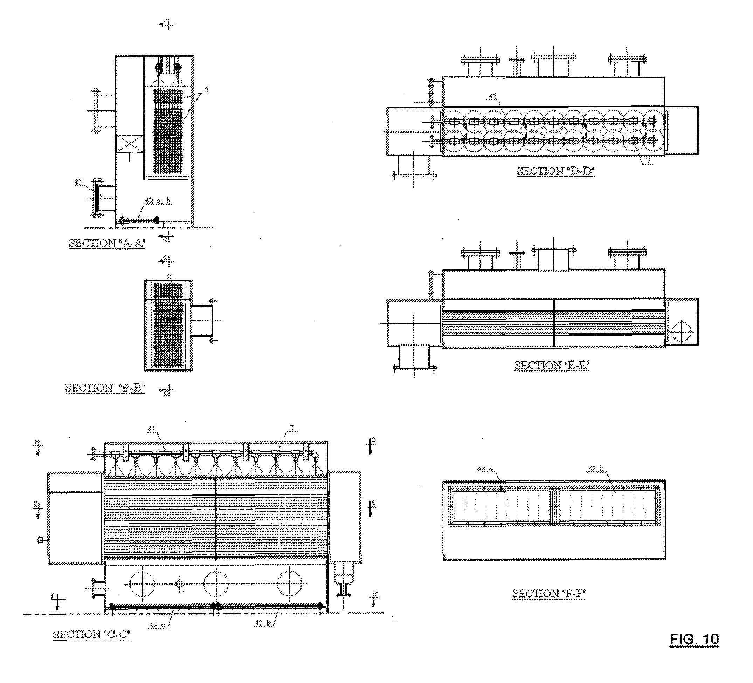

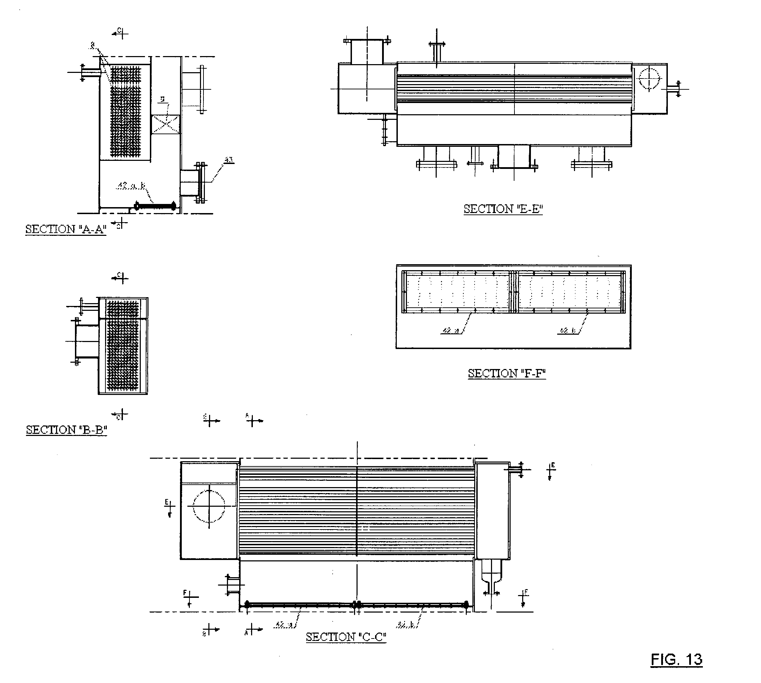

FIGURE 13 is the analogue of Figure 10, for the second effect (1.2);

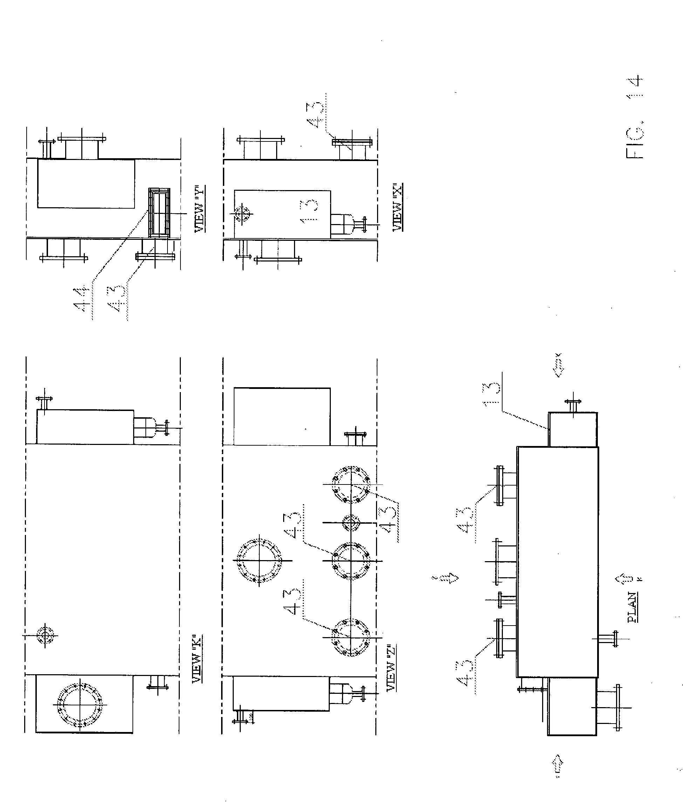

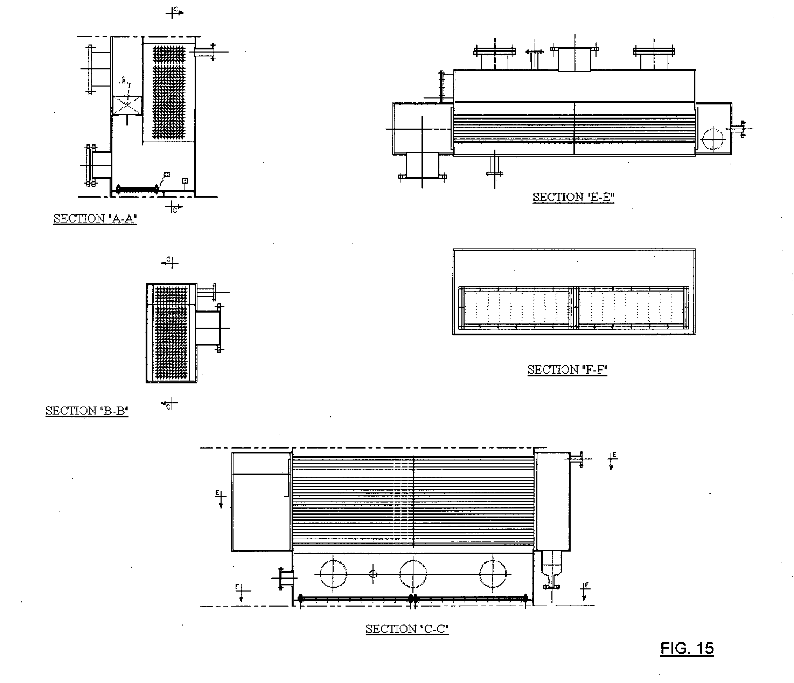

FIGURES 14 and 15 are figures analogous to Figures 12 and 13, for the third effect (1.3);

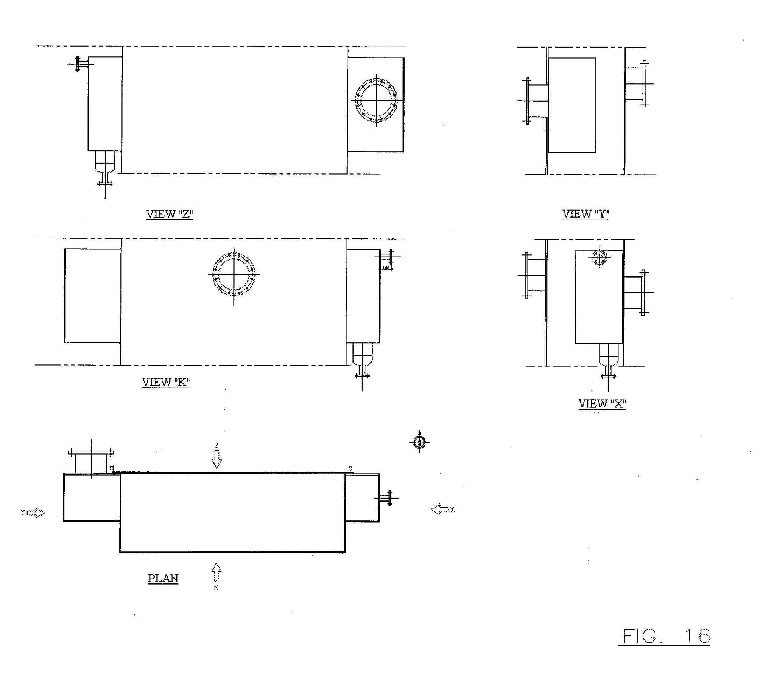

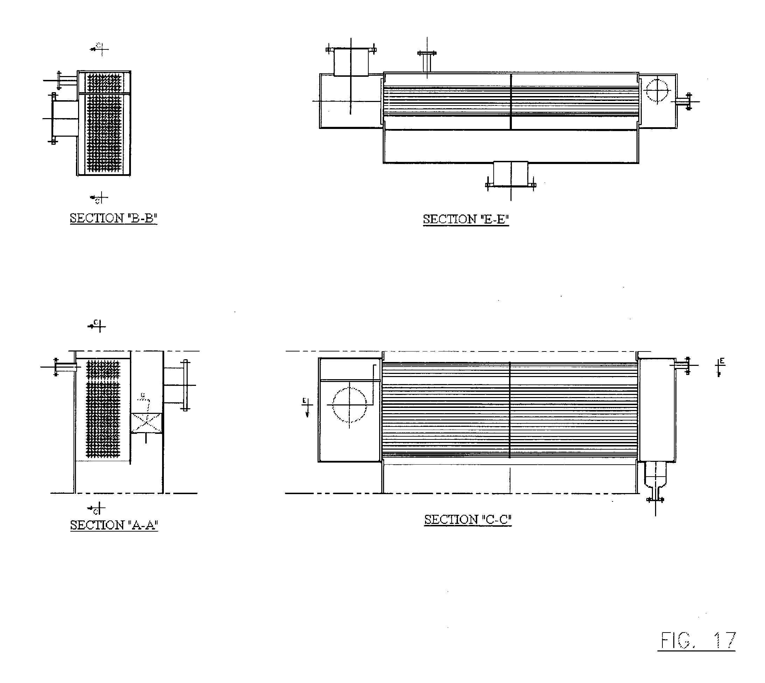

FIGURES 16 and 17 are figures analogous to Figures 12 and 13, for the fourth (and in this embodiment last) effect (1.4);

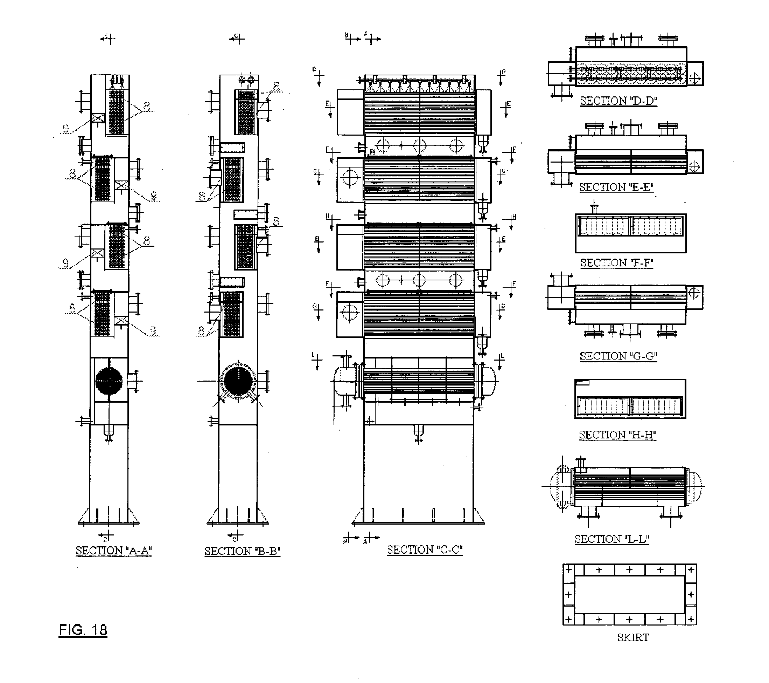

FIGURE 18 shows from left to right:
   - central body section seen from the "west";
   - central body section seen from the "east";
   - central body section seen from the "south";
   - different sections on various horizontal planes (D-D, E-E, F-F, G-G, H-H, L-L) of the various effects (1.1 up to 1.4) and of the condenser (2) (see also Figures 10, 13, 15, 17 and Fig. 5);

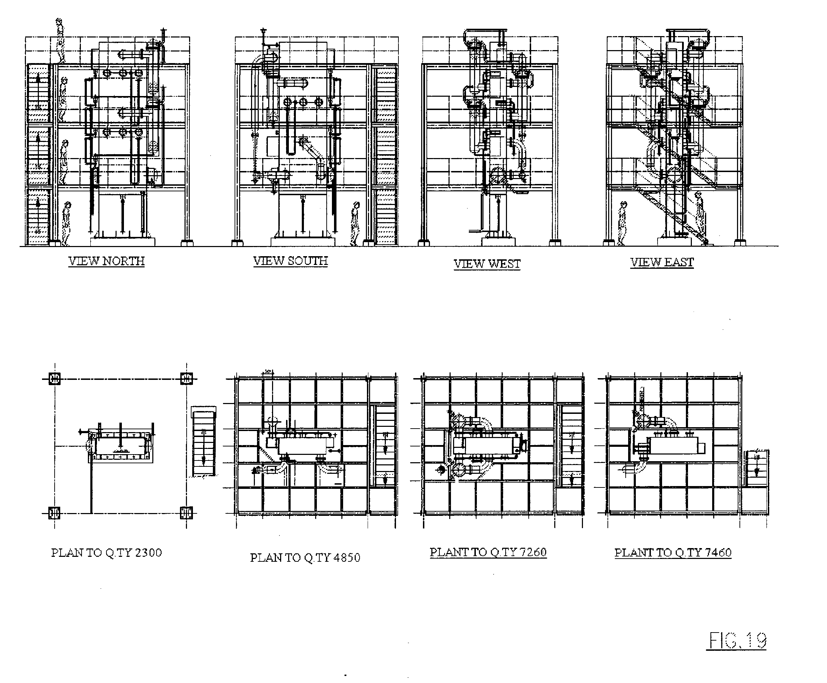

FIGURE 19 shows the multiple-effect evaporator of the present invention, together with the lattice framework with the access stairs or ramps for the maintenance, repair, replacement of parts, etc., and specifically:
   - on the top, from left to right, the view from the "north", the view from the "south", from the "west", and finally from the "east";
   - below, several sections at various elevations and details, seen in plan view.

### Detailed description of the preferred embodiments

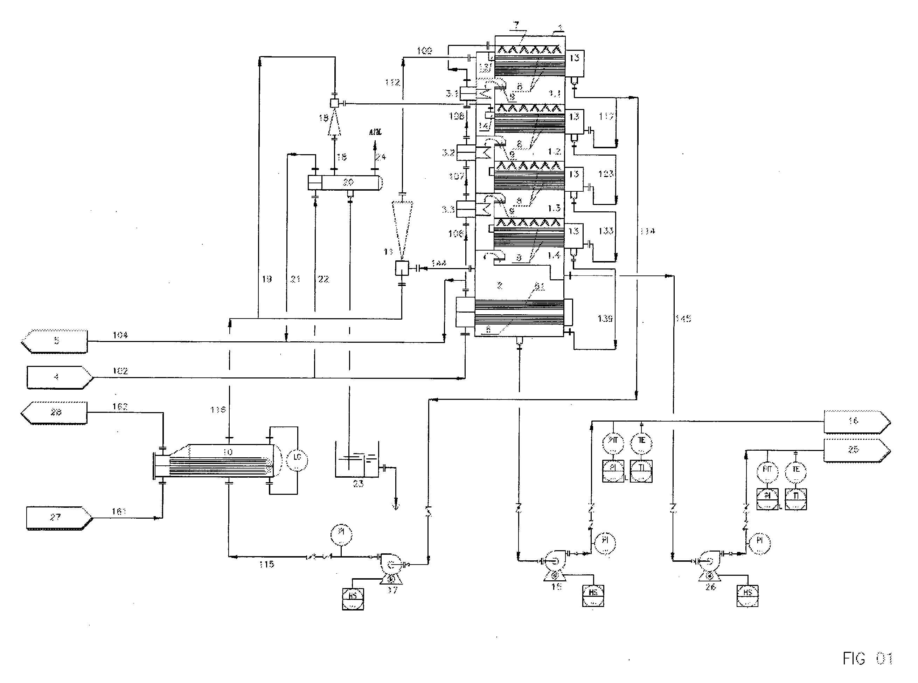

With reference to Fig. 1, this shows a flow diagram of a possible embodiment of a multiple-effect evaporator or desalination plant, with horizontal evaporation tube bundles, for small production according to the present invention.

The plant of the present invention comprises different effects 1.1, 1.2, 1.3, 1.4 which are superimposed in a manner so as to form a single vertical body, or vertical tower 1, of the desalination plant. A condenser 2 is placed at the base of the central body or tower 1 of the desalinator. Between the effect 1.1 and the effect 1.2, a pre-heater 3.1 is arranged, between the effect 1.2 and the effect 1.3, a pre-heater 3.2 is arranged, and between the effect 1.3 and the effect 1.4 a pre-heater 3.3 is arranged. The seawater is fed from the point indicated with 4 and is discharged at the point indicated with 5 in Fig. 1. It crosses through the tube 102, first entering into the horizontal tube bundles 6 of the condenser 2 from left to right in the figure, and then crossing the horizontal tube bundles 6' in the opposite direction, since it has been heated in the meantime by the latent heat of the vapor coming from the last effect 1.4 situated directly above the condenser 2. This seawater used for cooling in the condenser 2 then reaches the discharge point 5 through the tube 104. A part of the seawater supplied at 4 is however fed to the various pre-heaters 3.3, 3.2, 3.1 through the successive tubes 106, 107, 108, and thus it is progressively heated, until it reaches the top of the body 1 of the multiple-effect evaporator, in order to be sprayed through a plurality 7 of nozzles associated with one or better yet several horizontal tubes 109 which distribute the seawater in a perfectly uniform manner over the horizontal tube beams 8 of the upper effect, i.e. of the first effect 1.1. In the tube bundles 8 of the first effect 1.1, the vapor passes which comes from a boiler 10 and from an ejector 11, which shall be discussed below. It is observed that this vapor fed to the first (upper) effect 1.1 through the tubes 116, 112, first crosses the first part (or lower "passage") of the horizontal evaporation tube bundle 8, and then, in the opposite direction (as in the case of the condenser 2) the upper passage, still indicated in the present case with the number 8 but which has a smaller vertical extension. The vapor reaches the chamber indicated by the reference number 13 and then the chamber indicated by the reference number 12. The condensate that is formed in the chamber 13 will be added to the distillate by means of a cascade system shown in the figures. The residual condensate in the chamber 12 is also recovered by means of a tube system (not shown).

The vapor fed by the ejector 11 in the first effect 1.1 evaporates in part the seawater sprayed by the nozzles 7 on the tube bundle 8 of the first effect 1, and this vapor then crosses the drop separator 9 (which retains the possible brine drops which would otherwise be taken away by the vapor), entering into the passage 14 of the vapor, in which the tubes are also provided for the pre-heater 3.1 crossed by the supply seawater passing through the tube 108. The vapor coming from the first effect 1.1 then transfers part of its heat to the supply seawater, and then it enters into the underlying horizontal evaporation tube bundle 8 of the second effect 1.2, once again first following the more consistent (lower) passage from left to right in Fig. 1 and then in the opposite direction the less extensive passage (upper), i.e. first reaching the chamber 13 of the effect 1.2 and then the (smaller) chamber 12 situated at the extreme left of the smallest passage of the tube bundle 8 of the effect 1.2. In the chamber 13, most of the condensate is once again collected and then sent in a cascade manner (see tubes 123, 133, 139, or loop seal, with siphon seal) to the base of the condenser 2, from where it is drawn as a distillate by means of the distillate pump 15 which then sends this product towards the point of use schematically indicated by the reference number 16. With regard to the condensate that is formed in the chamber 13 associated with the upper effect, or first effect 1.1, it is in part sent by means of suitable tube (loop seal) 117, in cascade manner, to the subsequent chamber 13 of the underlying effect 1.2, and so on, i.e. to the underlying chambers 13 of the other effects up to the condenser 2 from where it is drawn in the above-described manner, and part thereof is sent back to the boiler 10 by means of a pump 17 for the condensate and the relative tubes 114 and 115. The fresh water in the boiler 10 is heated, for example by means of diathermic oil (see arrows 27, 28 and ducts 161, 162), in turn heated by a solar panel plant; however, the heat could be transmitted to the boiler 2 with other systems, for example a gas plant, etc.

The above-described processes are repeated in the subsequent effects. That is, the vapor of the second effect 1.2 crosses the drop separator 9 corresponding with this effect, heats the tube bundle of the pre-heater 3.2 (i.e. pre-heats the supply seawater) and passing through the vertical vapor transfer tube it reaches the third effect 1.3, where it is inserted in the tube bundle 8 of the latter, traveling back and forth as described above. The condensate is recovered in the corresponding chambers 12, 13.

It is known that this type of desalination plants with multiple effects function at increasingly lower temperatures and pressures, from effect to effect, i.e. starting from the upper effect 1.1 to the condenser 2. This implies that it is necessary to remove the incondensable elements (CO₂, N₂, O₂, etc.) contained in the supply seawater, in order to reduce the pressure which would otherwise tend to grow. Most of these are suctioned by the chamber 12 of the effect 1.2, as shown in Fig. 1, where these incondensable elements, taken away with the vapor sent by the effect 1.1 to the effect 1.2, were collected and concentrated. This suction of the incondensable elements occurs by means of a second ejector 18. The remaining part of the incondensable elements are instead suctioned by the first ejector 11, which suctions a part of the exhaust vapor that is emitted (through the last drop separator 9) by the last effect 1.4 into the condenser 2, and uses the supply vapor 116 as driving fluid of the ejector 11. The necessary fall of pressure is thus maintained, as mentioned above, and the known thermocompression is actuated by reusing/suctioning a part of the vapor which reaches the condenser 2, inserting it through the tube 112 in the first effect, together with the vapor (driving fluid of the ejector 11) coming from the tube 116 of the boiler 10 (see above). The incondensable elements thus re-inserted in the cycle by the first ejector 11 are in reality clearly expelled into the atmosphere by the second ejector 18, in the following manner: a part of the vapor in 116 is deviated in the tube 19 of Fig. 1 and brought as driving fluid to said second ejector 18, and then to the ventilation condenser 20; in the latter (together with the incondensable elements suctioned by the chamber 12 of the effect 1.2) it is cooled by a part of the supply seawater circulating in the deviation tubes 21, 22. The condensate that is formed is collected in the barometric well 23 and the incondensable elements are expelled into the atmosphere at the point indicated with 24.

In this exemplifying embodiment, the concentrated brine (the so-called "blowdown") is collected at the bottom of the lowest effect 1.4, by means of the blowdown pump 26 and the relative tube 145. Of course, in another embodiment, the brine could also be drawn by a suitable expansion chamber obtained in the vapor space of the condenser 2, obtaining an additional production of distillate following the flash associated with the pressure difference between the effect 1.4 and the condenser 2.

Several details have been omitted from the present description.

First of all, the control and regulation systems were not described (flows/flow rate, pressures, temperatures, etc.), since these do not directly regard the present invention and are already known to a person skilled in this field.

In addition, it is important to note that the evaporation horizontal tube bundles 8 are simply formed by tubes connected only at the ends to two respective metal plates connected to the casing of the body 1 of the multiple-effect evaporator. The seawater sprayed by the nozzles 7 but which does not succeed in evaporating on the tube bundle 8 of the first effect 1.1 is collected on the bottom of the first effect 1.1, and the same process is repeated for the second effect, 1.2, and for the third effect, 1.3. The concentration of the brine of course increases from effect to effect since an increasingly greater amount of distillate is separated with each effect. The brine collected on the floor or base of an effect 1.i, i.e. on the horizontal separation wall between two effects 1.i and 1.(i +1), does not require being sprayed, by virtue of the difference in pressure in any case existing between two subsequent effects 1.i and 1.(i+1). Thus, even if the representation in Figure 1 could be deceiving, the base of every effect, excluding the last 1.4, comprises a perforated plate (described below) from whose holes the water is sprayed on the tube bundles 8 of the subsequent effect due to the pressure difference between the effects and due to the brine head that is formed on the perforated plate itself. The level of this head, for every effect 1.i, is constantly held under control by respective loop seals not shown in Fig. 1, which allow the excess brine to pass to the subsequent underlying effect without however passing vapor through. The control is carried out by substantially maintaining such head at the level of the mouth of the respective loop seal, neither more nor less, respectively increasing or decreasing in a manner corresponding to the supply seawater 4 flow rate inserted in the tube 106.

Another aspect to consider with regard to the incondensable elements (also those which penetrate into the surrounding atmosphere, no matter how watertight the plant might be overall), is the following. A part of the incondensable elements can be made to simply exit through the holes present on the walls of the chambers 12 of the effects 1.3 and 1.4, since most of these have in any case been suctioned by the chamber 12 of the effect 1.2, by the second ejector 18, and the remainder are sent back through the cycle together with a part of the vapor in the condenser 2, by means of the first ejector 11, in order to then be expelled by the second ejector 18, as already described.

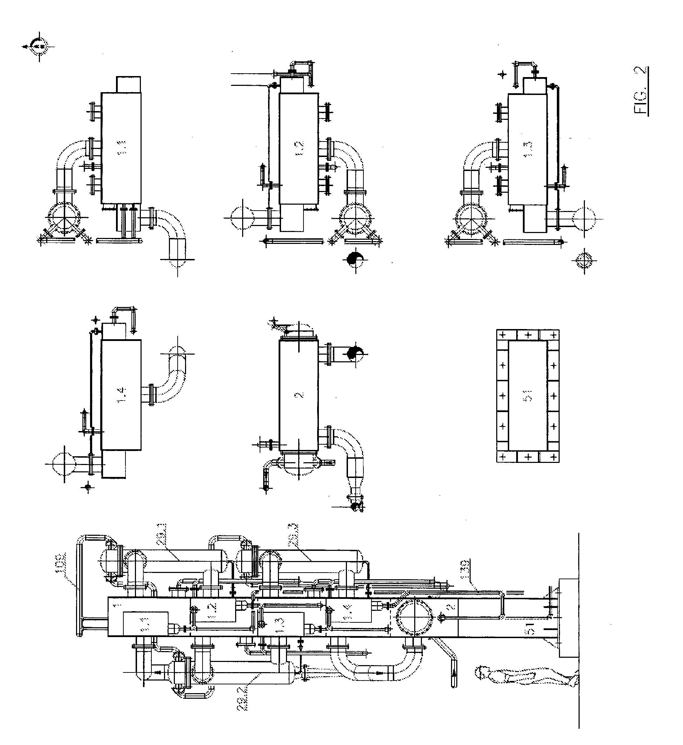

Also with regard to the remaining figures (Figs. 2 up to 19), the salient points of the present invention will now be described.

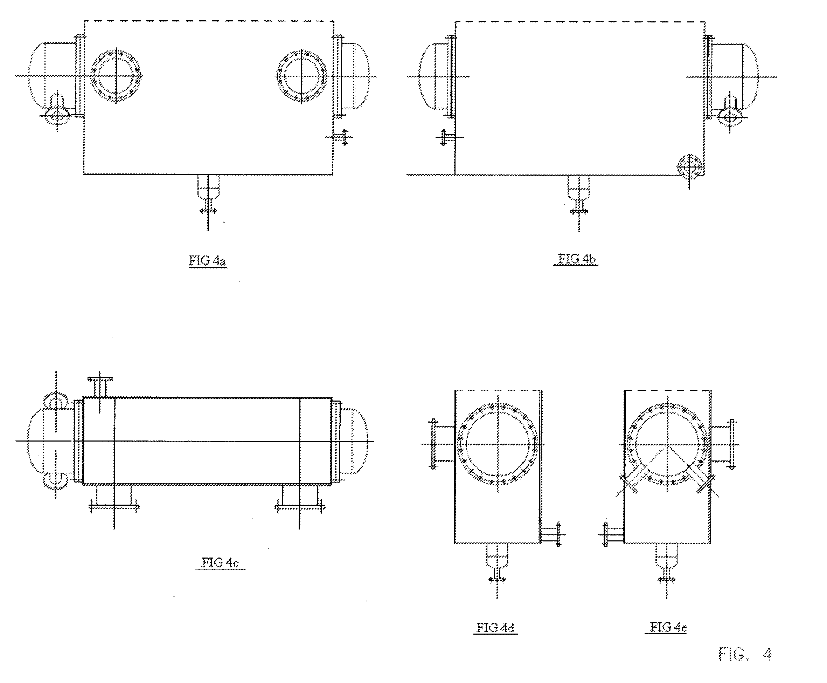

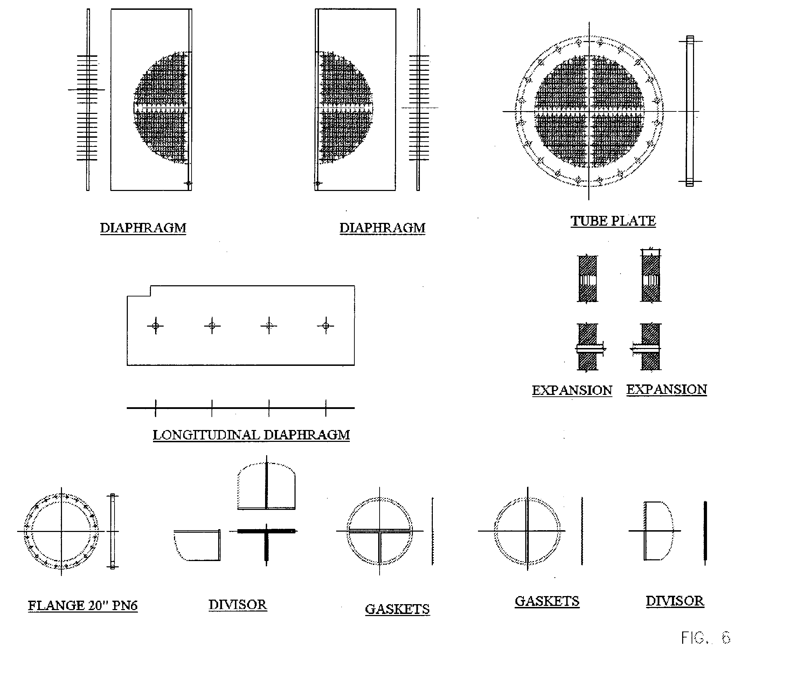

For indicating the components already present in the flow diagram of Fig. 1, the same reference numbers are also used in Figures 2 - 19.

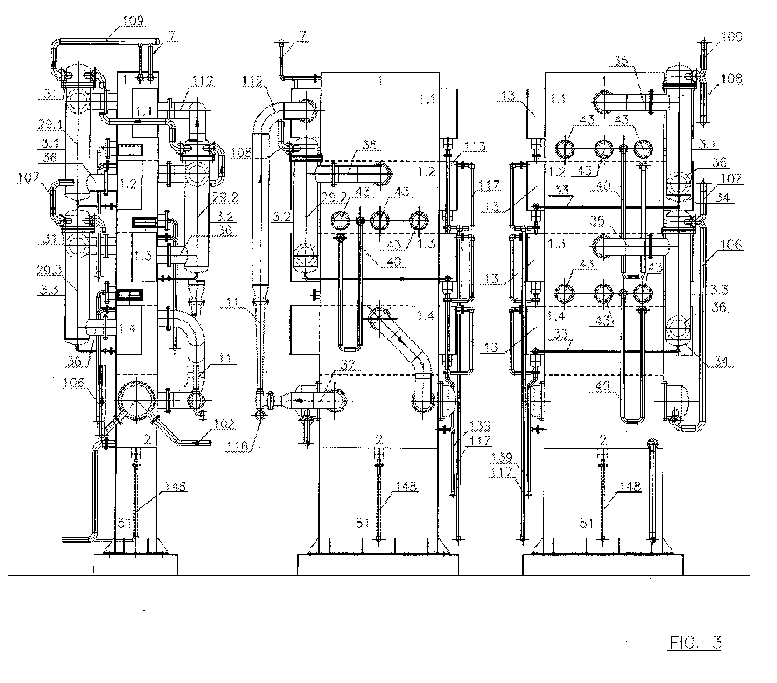

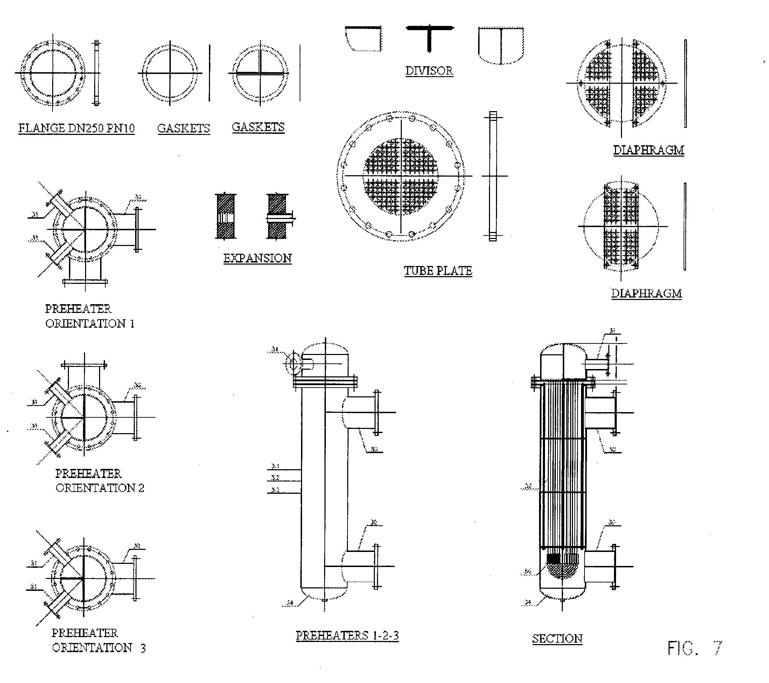

In Fig. 2, it is observed that each effect 1.1, 1.2, 1.3 (which essentially constitutes a watertight element with respect to the outside environment) communicates with the subsequent effect by means of a vapor transfer tube 29.1, 29.2, 29.3 comprising the respective pre-heater 3.1, 3.2, 3.3 and respective horizontal, rectilinear and curved sections, connected via flange 30 (see bottom of Fig. 7) with the respective pre-heater 3.1, 3.2, 3.3. The gates or connectors 31 at the top of each pre-heater 3.i serve for the tubes 106, 107, 108, 109 of the supply seawater. Thus, the vapor runs through each pre-heater, which also has a tube bundle 32 at its interior that is crossed by the supply seawater passing through a gate or connector 31, runs through the entire tube bundle 32 of the respective pre-heater device and returns/exits from the top of the pre-heater through the other of these gates 31; it then reaches the subsequent pre-heater and its tube bundle, and continues in such manner up to the spray nozzles 7. At the bottom of each pre-heater 3.1, 3.2, 3.3, a chamber 34 is provided for collecting the condensate, which is connected by means of ducts of the distillate 33 (Fig. 3 on the right) with the chamber 13 of a subsequent effect.

In addition, the various chambers 13 are connected in cascade manner via tubes (loop seals) as described in Fig. 1.

The vapor supplied by the ejector 11 enters into the first effect as in Fig. 3 on the left and first reaches (passing through the largest passage of the tube bundle 8 of the first effect 1.1) the chamber 13 where most of the vapor is condensed. The vapor produced with the seawater in the first effect 1.1 crosses through the first pre-heater 3.1, first passing through the curved horizontal section 35 (see Fig. 3 on the right), condenses in part (the condensate is recovered in the described manner) and most of this vapor is then inserted in the tube bundle 8 of the subsequent effect 1.2 through the rectilinear horizontal duct 36. Analogous connections 35 and 36 are shown for all the effects in Fig. 3. It is observed that the number 37 indicates a collection duct of the vapor which is drawn from the condenser and suctioned by the ejector 11.

The functioning cycle is repeated with every effect up to the last effect, in the presence of progressively lower pressures that in such a manner allow the evaporation of the seawater (which falls as drops from the perforated plate of the preceding effect) due to the vapor which crosses the respective horizontal evaporation tube bundle 8, even if this vapor has progressively decreasing temperatures from one effect to the next, from the highest 1.1 to the lowest 1.4.

Most of the vapor generated in the last effect 1.4 is condensed in the condenser 2 (except for that drawn from the ejector 11), the latter being cooled by means of the seawater (102, 104; Fig. 1).

As stated above, each effect produces a small amount of distillate via condensation of part of the vapor generated in the effect itself on the pre-heating tube bundle 32 of the supply water in 106. Taking under consideration the flow of this distillate in the aforesaid tubes 33, the distillate produced in a pre-heater 3.i is collected in its chamber 34 and joined, through the relative tube 33, to the condensate of the tube bundle 8 belonging to the subsequent effect 1.(i+1) and which is collected in the collection chamber 13 of the condensate of this last effect; there is a flash, i.e. expansion of the liquid in crossing valves, and the attainment of equilibrium conditions at the pressure of the effect 1.(i+1) with cooling of the distillate. Distillate and concentrated brine are respectively collected from the bottom of the condenser 2 and from the bottom of the effect 1.4 which naturally lacks the perforated plate.

### APPLICATION EMBODIMENT

As an illustration of the application of the present invention, a design and numerical embodiment is presented which uses the principles identified in the present finding.

A particular feature of the application embodiment lies in the fact that for the supply of the heat necessary for its functioning, it employs pressurized vapor as driving fluid in the ejector 11 for the thermocompression of part of the vapor produced by the last effect 1.4 of the evaporator, in such a manner obtaining a significant increase of the plant performance given the same number of effects employed.

In the present application example, the pressurized driving vapor (10 bar at 180°C) is produced by means of a heat-carrying fluid (diathermic oil) heated in a field of concentrator solar panels. The main characteristics of the seawater evaporation plant via thermocompression with multiple effects are reported in the following table:

| PARAMETER | UM | VALUE |
|---|---|---|
| Nominal production capacity | [m³/g] | 50 |
| Driving vapor characteristics | | |
| Temperature | [°C] | 180 |
| Pressure | [bar a] | 10 |
| Flow rate | [kg/h] | 440 |
| Supply seawater | [kg/h] | 15500 |
| Produced distillate | [kg/h] | 2050 |
| Discharged brine | [kg/h] | 13415 |
| Cooling seawater | [kg/h] | 25460 |
| 1^{st} effect operating temperature⁽*⁾ | [°C] | 65.4 |
| 2^{nd} effect operating temperature⁽*⁾ | [°C] | 60.5 |
| 3rd effect operating temperature⁽*⁾ | [°C] | 55.2 |
| 4th effect operating temperature⁽*⁾ | [°C] | 48.6 |
| Condenser operating temperature | [°C] | 47.0 |
| 1^{st} effect operating pressure (tube side) | [mmHg] | 240.0 |
| Operating pressure of the condenser | [mmHg] | 80.4 |
| Heat exchange surface area / effect | [m²] | 30 |
| Heat exchange surface area / pre-heater | [m²] | 10 |

| | | |
|---|---|---|
| (*) casing side | | |

With reference to the structural principles defined in the present invention, a configuration is obtained of the evaporation apparatus which shows the following advantageous characteristics:
a) eccentric tube bundles 8, for simplifying the arrangement of the systems 9 for separating the brine drops taken away by the vapor, with advantages including structural simplification and maintenance ease (see Fig. 18);
b) drawing and feeding the vapor produced at each effect 1.i and transfer to the subsequent effect 1.(i+1) arranged in an alternating manner with respect to the symmetry plane of the evaporator 1, minimizing the bulk and use of construction material and at the same time preventing interferences between the main components (for example 29.1 up to 29.3) of the evaporator (see Fig. 2);
c) ease of transfer of the liquid currents (seawater, brine and distillate) between successive effects, due to the superimposed arranged of the effects, with simultaneous hydraulic seal (separation of the vapor atmospheres) by making such transfers through hydraulic siphons (loop-seals) (e.g. 40 in Fig. 3 and 117-123-133-139).

### DISTRIBUTION OF THE LIQUID ON THE EVAPORATION TUBE BUNDLES

The distribution on the tube bundle 8 of the first effect 1.1 is different from the distribution on the bundles 8 of the subsequent effects, since the pre-heater seawater is sprayed directly on the tubes 8 which constitute the first effect 1.1 through spray nozzles 7 which ensure its soaking in an appropriate flow rate field (approximately from 70 to 120% of the value of the design flow rate). The nozzles 7 are arranged on parallel collectors 41 (Fig.10) (two in the present case) and are characterized by an opening of the jet sufficient for ensuring the uniform distribution of the water on the surface of the first group of tubes of the tube bundle 8. The collectors 41 are extractible from the body of the evaporator in order to ensure facilitated mounting and maintenance.

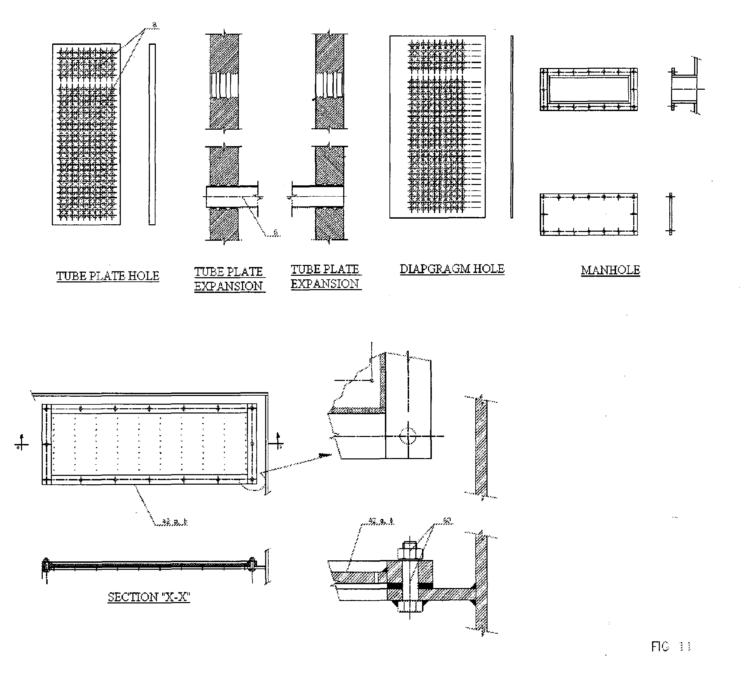

The distribution of the liquid on the tube bundles 8 of the subsequent effects 1.2, 1.3, 1.4 is achieved by means of a horizontal metal plate composed of two identical parts 42a and 42b (Figs. 11 and 13), which constitutes the bottom of the upper effect and the cover of the lower effect. Said plate is perforated with a number of holes with diameter and arrangement such to ensure the uniform soaking of the first group of tubes of the bundle 8 downstream. The diameter of the holes and their distribution were designed based on the experimental data available in R. Rautenbach, B. Artz; "LARGE SCALE DIESEL DRIVEN VAPOR COMPRESSION UNITS", Desalination, 38 (1981) 75-84 and R. Rautenbach, J. Gebel "On The Concentration of Ro-brines by Seeded Horizontal Tube Falling Film Evaporation (HTFE) " Desalination, 76 (1989) 107-119*.*

In the present application, the number of holes per plate is equal to 200, with ø 3 mm and rectangular passage 94 x 25 mm, aligned with the generatrices of the tubes of the 1^{st} group. The passage of the seawater through the holes is assured by the sum of the pressure difference between the vapor spaces between the contiguous effects and the liquid head that is formed on the perforated plate. A liquid flow rate through such perforated plate 42a,b corresponds to each total pressure difference value between the two sides of the perforated plate. The effective liquid flow rate is regulated in a manner so as to be slightly greater than that corresponding to the total pressure difference given by the sum of the pressure difference between the two effects and by a pre-established head. The excess flow rate is drained through a hydraulic seal (loop-seal) 40 which connects the chamber of the upper effect with the lower effect; such loop-seal 40 is positioned in the upper chamber so as to define the maximum level reachable by the liquid at its bottom, since further accumulation is drained through it and sent to the lower effect.

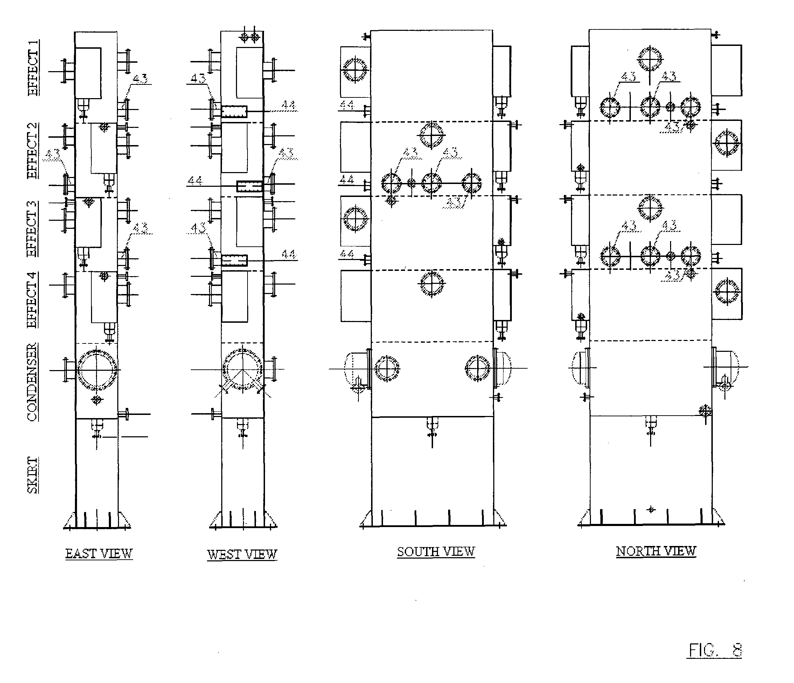

The perforated inter-effect plates 42a,b are externally accessible - by means of suitable doors 43 (Fig. 8 and Fig. 9, for example) - and are removable by means of a drawer 44 for maintenance and substitution.

The actual liquid level at the bottom of each effect is measured by an instrument; if one of the levels is less than the desired level - identified by the position of the loop-seal 40 - the flow rate of liquid supplied to the first effect 1.1 is increased until the desired level is obtained in all the effects.

### EVAPORATION TUBE BUNDLES

The main design requirement of the evaporation tube bundles is their uniform external soaking by the water which is made to percolate. The intensity of the soaking is in turn correlated with the heat exchange coefficient that is obtained, increasing therewith.

The flow rate of the supply water - and thus the intensity of the soaking of the tube bundles - is limited by the associated increase of the heat amount necessary for its pre-heating up to the boiling point in the first effect.

The compromise solution found involves the design of tube bundles with rectangular cross section, with greater vertical axis (see Fig. 10). The ratio between height and width of the band is equal to about 3 in the present non-limiting embodiment.

The fundamental parameter for the definition of the length of the tube bundle is the entry speed of the vapor into the tubes 8. In the present application, the speed selected is about 20 m/s. The resulting length of the tube bundle is equal to 2'000 mm.

In order to obtain a high concentration of the incondensable gases that are accumulated in the tube bundles 8 and to facilitate their removal, the tube bundle has been provided on two asymmetric passages, as already illustrated above, to obtain the same entry speed of the vapor in both. With such selection, the surface area of the second passage is equal to about 20% of the surface area of the first passage.

### TUBE BUNDLES OF THE PREHEATERS OF THE SUPPLY

In order to limit the complexity of the construction of the casing of the evaporator and its interiors, according to the present invention the inter-effect vapor passages (29.1, 29.2, 29.3) are made by means of external tubes, rather than through passages made inside the casing of the evaporator 1 - as occurs in conventional evaporators.

The preheating tube bundles 32 - which can be "bayonet" unthreaded with "U"-shaped tubes 50 (see Fig. 7) - are positioned inside the passage tubes 29.1, 29.2, 29.3 of the inter-effect vapor.

The arrangement of the tube bundles 32 and 50 uses the spatial progression of the tubes.

The condensate produced by the preheating tube bundles is collected at the bottom 34 of the vertical tube sections of the vapor in which the pre-heaters 3.1, 3.2, 3.3 are housed, and then poured off into the tank 13 of the condensates of the evaporation bundle of the effect downstream, to which the vapor is transferred.

### FINAL CONDENSER

The condenser 2 of the vapor generated in the last effect is housed inside the casing 51 of the evaporator 1, below the latter effect 1.4. The condenser 2 is constituted by a tube bundle 52 with circular section, with length equal to the tube bundles 8 of the evaporation effects 1.i. The cooling water runs through the internal side of the tubes. The tube plates are welded to the walls of the casing. The condensate produced is collected at the bottom of the casing, in the manner indicated in Fig. 3, for example.

Since the evaporator is (in this application embodiment) of thermocompression type, even if all the vapor generated in the last effect is sent to the condenser, only a fraction of the vapor is condensed, while the remaining part is sent to the thermocompression ejector 11. The vapor is inserted at one end of the bundle of the condenser, conveyed by means of false casing and diaphragms and extracted at the other end of the bundle. In such a manner, all of the incondensable gases present in the vapor coming from the last effect are sent, together with the heating vapor, to the interior of the tube bundle 8 of the first effect 1.1.

### INCONDENSABLE GASES

Since the evaporator 1 is run at temperatures of less than 100°C, the pressure at its interior is of course sub-atmospheric. Therefore, in its functioning, there is the problem of managing the incondensable gases.

The incondensable elements present in the evaporator are generated by the inlet of air due to the sub-atmospheric operating pressure of the plant, from the gases dissolved in seawater (N₂, O₂, Ar etc.) and from the CO₂ released by the thermal decomposition of the bicarbonates dissolved in seawater, according to the equation:

2 HCO₃⁻ → CO₃⁼ + H₂O + CO₂^{↑}

Most of the incondensable gases deriving from fed seawater are released in the casing of the first effect, from which they pass into the tubes of the second effect where, following the condensation achieved therein, they are concentrated in 12 (Fig. 1) and then extracted from the vacuum system 18 of the plant.

Also the incondensable elements present in the heating vapor sent to the first effect 1.1, after having been concentrated therein in 12 via condensation of the vapor, are poured into the vapor space of the same effect through a calibrated orifice (not indicated in the figures), thus joining the incondensable elements deriving from the supply seawater of 106.

The incondensable elements present in the casings of the second, third and fourth effects are led in a cascade manner (ducts 117-123-133-139) to the final condenser 2; from here they are removed in the already indicated manner.

### CONSTRUCTION MATERIALS

The maximum operating temperature of the evaporator is about 70°C. This allows using aluminum brass for making the tube bundles, both for evaporation and pre-heating.

For the construction of the casing 51 and the other members of the evaporator 1 in contact with the seawater, austenitic steel AISI 316L was selected for its characteristics of resistance to corrosion from seawater and brine in the presence of free oxygen.

The vapor ducts, also containing the tube bundles of the pre-heaters, are made of AISI 304 in order to eliminate the problems of contamination of the condensates and corrosion due to plant shutdowns, which would occur using carbon steel as construction material. Such choice also eliminates corrosion problems outside the device (especially in an aggressive environment like the sea) and the maintenance costs deriving from the periodic repainting of the plant.

### Industrial application

The present invention allows making a multiple-effect evaporator having the following characteristics:
- easy maintenance and construction;
- inexpensiveness;
- reduced height given the same performance;
- lightness of the central body;
- easy substitution of its external (joined) parts, but also of its internal joined components (single tubes of the tube bundles, drop filters, perforated plates and so on), without the operator having to physically enter inside each single effect;
- easy transportability and installation.

## Claims

1. Multiple-effect evaporator, for medium-low production of distillate, comprising only one evaporation tower, made up of a central body (1) having a first effect (1.1) to a final effect (I.n) arranged above a condenser (2), the effects (1.1-1.n) being stacked with respect to each other, each effect (1.i) comprising substantially at its interior a horizontal evaporation tube bundle (8) and a filter (9) for separating drops transported by the vapor, wherein a pre-heater (3.i), extended vertically and associated to a respective effect (1.i), is incorporated in the vertical section of a duct (29.i) for transferring the vapor generated in effect (1.i) to the subsequent effect [1.(1+1)]; further wherein, each pre-heater (3.1) has an upper head for inlet and outlet connectors (31, 31) of the supply seawater, and vertical internal tube bundles (32) which are preferably adapted to the spatial progression of the walls of the pre-lieaters (3.i); wherein each pre-heater further has - at the lower part - a first chamber (34) for collecting the condensate of the vapor condensed on the vertical tube bundle (32), **characterized in that**
- said transfer duct (29.i) is arranged outside the casing (51) of the evaporator;
- for at least one effect, but preferably for all the effects (1.1-1.n), a horizontal evaporation tube bundle (8) is made up of two passages or asymmetric "sub-bundles", i.e. a first passage having greater cross section and a second passage having smaller cross section, preferably to ensure a substantially identical inlet speed of the vapor that flows through the two passages in the reverse or opposite direction;
- the multiple-effect evaporator has perforated plates between one effect and the next, also made up of several parts (42a, 42b) to facilitate maintenance, for example when cleaning them, using special holes with doors (43) for manually removing the bolts and nuts (60) at the sides of the perforated plates and from the outside, and for loading the latter onto a carriage or laterally extractable drawer (44), or any other system extractable laterally from the casing (51) of the evaporator, without the operator entering physically into the effect itself, which can thus be made with small size.

2. Multiple-effect evaporator, according to claim 1, **characterized in that** an ejector (11) is provided for which uses - as driving fluid - the vapor provided by the vapor source (10), for example a boiler (10), for suctioning (37; 144) part of the vapor discharged from the condenser and/or from the last effect (1.n), and inserting it together with said driving fluid into the horizontal evaporation tube bundle (8) of the first effect (1.1).

3. Multiple-effect evaporator, according to claim 1 or 2, **characterized in that** to reduce the height of the central body (1) of the multiple-effect evaporator, the arrangement of the effects (1.1-1.n) is alternating and eccentric with respect to the vertical symmetry plane of the central body (1), **in that** should the horizontal evaporation tube bundle (8) be moved to the right with respect to said vertical symmetry plane for the effect (1.i), then the horizontal evaporation tube bundle (8) is moved to the left of said vertical symmetry plane for the subsequent effect [1.(i+1)] and for the preceding effect (1.(i-1)], if present, while concerning the filter (9) for separating drops the reverse occurs; such more compact alternating construction allowing preventing interferences between the parts outside the casing (51) of the central body (1), particularly between the ducts (29.i) for transferring the vapor from one effect to the other.

4. Multiple-effect evaporator, according to any one of the preceding claims, **characterized in that** it has horizontal evaporator tube bundles (8), for each single effect, having a rectangular cross section.

5. Multiple-effects evaporator, according to claim 4, **characterized in that** each rectangular cross section has a ratio between its height h and its width b of greater than 1, preferably h/b = 3.

6. Multiple-effect evaporator, according to any one of the preceding claims, **characterized in that** the horizontal evaporator tube bundles (8) of each effect (1.i), on the side opposite the position of the pre-heaters [(3.1-3.(n-1)], end in a respective second chamber (13) for collecting condensate for the respective effect (1.i); said second chambers (13) for collecting the condensate being connected to each other in a cascading manner through special loop-seals (117, 123, 133, 139).

7. Multiple-effect evaporator, according to any one of the preceding claims, **characterized in that** all tubes (106, 107, 108, 109) for delivering the supply seawater, connected to the various inlet and outlet connectors (31, 31) of the supply seawater, arranged on the heads of the pre-heaters [3.1 up to 3.(n.1)], and which lastly lead (109) to the collectors bearing a plurality of nozzles (7) for spraying seawater onto the horizontal evaporation tube bundle (8) of the first effect (1.1), are exclusively arranged outside the casing (51) of the central body (1) of the evaporator.

8. Multiple-effect evaporator, according to any one of the preceding claims, **characterized in that** each first chamber (34) for collecting the condensate, arranged at the bottom of each pre-heater (3.i), is connected through distillate ducts (33) with said second chamber (13) for collecting condensate associated with a subsequent effect [3.(i+1)].

9. Multiple-effect evaporator, according to any one of the preceding claims, **characterized in that** it has ducts (40) of the "loop seal" type, i.e. with siphon valve, between one effect and the other, to control the maximum level of the more concentrated seawater head, on the bottom of each effect (1.i).

10. Multiple-effect evaporator, according to claim 1, **characterized in that** at the end of the second passage of the horizontal evaporation tube bundle (8) of at least one effect, and preferably of all the effects (1.1 up to I.n), there is a small chamber (12) for collecting the residual condensate, in which also the incondensable elements are concentrated, which are either eliminated through the holes present in said small chamber (12), or preferably suctioned from said small chamber (12) in the case of the second effect (1.2) through a second ejector (18).

11. Multiple-effect evaporator, according to claim 10, **characterized in that** the second ejector (18) is supplied with part of the supply vapor (116) coming from the vapor source (10) which reaches it through a by-pass tube (19), wherein a ventilation condenser (20) - arranged downstream of the second ejector (18) and cooled with part (22, 21) of the supplied seawater - collects the residual condensate and expels the incondensable elements suctioned by the second ejector (18) from said small chamber (12) into the atmosphere (24), preferably the small chamber (12) of the second effect (1.2).

12. Multiple-effect evaporator, according to claim 6, **characterized in that** part of the condensate is removed from the second chamber (13) for collecting the condensate, which is associated to the first effect (1.1) through a duct (114, 115) and respective condensate pump (17), in such a manner that part of the condensate may be sent back to the vapor source (10) before being sent to the first effect (1.1).

13. Multiple-effect evaporator, according to any one of the preceding claims, wherein the distillate, or end product, i.e. fresh water, is drawn from the bottom of the condenser (2) through a distillate pump (15), while the concentrated brine is preferably removed from the last effect (1.n) through the discharge pump (26).

14. Multiple-effect evaporator, according to any one of the preceding claims, wherein each tube of the tube bundle (6, 6') of the final condenser (2), and of each horizontal evaporation tube bundle (8) of each effect (1.i), can be separately unthreaded/dismounted for maintenance or substitution thereof.

## Patentansprüche

1. Mehrfacheffekt-Verdampfer für die mittel-niedrige Produktion von Destillaten, der nur einen Verdampfungsturm aufweist, der sich aus einem zentralen Körper (1) mit einem ersten Effekt (1.1) bis einem letzten Effekt (1.n), die über einem Kondensator (2) angeordnet sind, zusammensetzt ist, wobei die Effekte (1.1 - 1.n) im Verhältnis zueinander gestapelt sind, wobei jeder Effekt (1.i) im Wesentlichen in seinem Inneren ein horizontales Verdampfungsrohrbündel (8) und ein Filter (9) zum Abscheiden der vom Dampf transportierten Tropfen aufweist, wobei ein Vorwärmer (3.i), der sich vertikal erstreckt und einem jeweiligen Effekt (1.i) zugeordnet ist, zum Übertragen des im Effekt (1.i) erzeugten Dampfs zum nachfolgenden Effekt [1.(1+1)] in den vertikalen Abschnitt einer Leitung (29.1) eingebaut ist, wobei des Weiteren jeder Vorwärmer (3.i) einen oberen Kopf für Einlass- und Auslassverbinder (31, 31) des zugeführten Meerwassers und vertikale innere Rohrbündel (32) hat, die vorzugsweise für den räumlichen Verlauf der Wände der Vorwärmer (3.1) ausgeführt sind, wobei jeder Vorwärmer an dem unteren Teil eine erste Kammer (34) zum Sammeln des Kondensats des an dem vertikalen Rohrbündel (32) kondensierten Dampfs hat, **dadurch gekennzeichnet, dass**
- die genannte Übertragungsleitung (29.i) außerhalb des Gehäuses (51) des Verdampfers angeordnet ist,
- ein horizontales Verdampfungsrohrbündel (8) für wenigstens einen Effekt, aber vorzugsweise für alle Effekte (1.1 - 1.n) aus zwei Durchläufen oder asymmetrischen "Teilbündeln" zusammengesetzt ist, d.h. einem ersten Durchlauf mit einem größeren Querschnitt und einem zweiten Durchlauf mit einem kleineren Querschnitt, vorzugsweise um eine im Wesentlichen identische Einlassgeschwindigkeit des Dampfs sicherzustellen, der in der umgekehrten oder entgegengesetzten Richtung durch die zwei Durchläufe strömt,
- der Mehrfacheffekt-Verdampfer zwischen einem Effekt und dem nächsten Lochplatten hat, die zur Vereinfachung der Wartung, zum Beispiel bei ihrer Reinigung, mithilfe von speziellen Löchern mit Türen (43) zum manuellen Entfernen der Schrauben und Muttern (60) an den Seiten der Lochplatten und von außerhalb und zum Laden der Letzteren auf einen Schlitten oder eine seitlich ausziehbare Schublade (44) oder ein anderes seitlich aus dem Gehäuse (51) des Verdampfers ausziehbares System, ohne dass die Bedienkraft physisch in den Effekt selbst eintritt, der daher in kleiner Größe ausgeführt werden kann, ebenfalls aus mehreren Teilen (42a, 42b) zusammengesetzt sind.

2. Mehrfacheffekt-Verdampfer nach Anspruch 1, **dadurch gekennzeichnet, dass** eine Strahlpumpe (11) vorgesehen ist, die als Treibfluid den von der Dampfquelle (10), z.B. einem Erhitzer (10), bereitgestellten Dampf zum Absaugen (37; 144) von Teil des aus dem Kondensator und/oder dem letzten Effekt (1.n) abgelassenen Dampfs und zum Einführen von ihm zusammen mit dem genannten Treibfluid in das horizontale Verdampfungsrohrbündel (8) des ersten Effekts (1.1) verwendet.

3. Mehrfacheffekt-Verdampfer nach Anspruch 1 oder 2, **dadurch gekennzeichnet, dass** die Anordnung der Effekte (1.1 - 1.n) zur Verringerung der Höhe des zentralen Körpers (1) des Mehrfacheffekt-Verdampfers in Bezug auf die vertikale Symmetrieebene des zentralen Körpers (1) insofern abwechselnd und exzentrisch ist, als dann, wenn das horizontale Verdampfungsrohrbündel (8) in Bezug auf die genannte Symmetrieebene für den Effekt (1.i) nach rechts versetzt sein sollte, das horizontale Verdampfungsrohrbündel (8) für den nachfolgenden Effekt [1.(1+1)] und für den vorhergehenden Effekt [1.(1-1)], falls vorhanden, nach links versetzt ist, während hinsichtlich des Filters (9) zur Tropfenabscheidung umgekehrt vorgegangen wird, wobei eine solche kompaktere abwechselnde Bauweise es ermöglicht, unerwünschte Berührungen zwischen den Teilen außerhalb des Gehäuses (51) des zentralen Körpers (1), speziell zwischen den Leitungen (29.i) für den Transport des Dampfes von einem Effekt zum anderen zu vermeiden.

4. Mehrfacheffekt-Verdampfer nach einem der vorhergehenden Ansprüche, **dadurch gekennzeichnet, dass** er für jeden einzelnen Effekt horizontale Verdampferrohrbündel (8) hat, die einen rechteckigen Querschnitt haben.

5. Mehrfacheffekt-Verdampfer nach Anspruch 4, **dadurch gekennzeichnet, dass** jeder rechteckige Querschnitt ein Verhältnis von seiner Höhe h zu seiner Breite b von mehr als 1 hat, vorzugsweise h/b = 3.

6. Mehrfacheffekt-Verdampfer nach einem der vorhergehenden Ansprüche, **dadurch gekennzeichnet, dass** die horizontalen Verdampferrohrbündel (8) jedes Effekts (1.i) an der Seite, die der Position der Vorwärmer [3.1 - 3.(n-1)] gegenüberliegt, in einer jeweiligen zweiten Kammer (13) zum Sammeln von Kondensat für den jeweiligen Effekt (1.i) enden, wobei die genannten zweiten Kammern (13) zum Sammeln des Kondensats durch spezielle Sperrschleifen (117, 123, 133, 139) kaskadierend miteinander verbunden sind.

7. Mehrfacheffekt-Verdampfer nach einem der vorhergehenden Ansprüche, **dadurch gekennzeichnet, dass** alle Rohre (106, 107, 108, 109) zur Lieferung des zugeführten Meerwassers, die mit den verschiedenen Einlass- und Auslassverbindern (31, 31) des zugeführten Meerwassers verbunden sind, die an den Köpfen der Vorwärmer [3.1 bis 3.(n-1)] angeordnet sind, und schließlich (109) zu den Sammlern führen, die eine Vielzahl von Düsen (7) zum Aufsprühen von Meerwasser auf das horizontale Verdampfungsrohrbündel (8) des ersten Effekts (1.1) tragen, ausschließlich außerhalb des Gehäuses (51) des zentralen Körpers (1) des Verdampfers angeordnet sind.

8. Mehrfacheffekt-Verdampfer nach einem der vorhergehenden Ansprüche, **dadurch gekennzeichnet, dass** jede erste Kammer (34) zum Sammeln des Kondensats, die am Boden jedes Vorwärmers (3.i) angeordnet ist, durch Destillatleitungen (33) mit der genannten zweiten Kammer (13) zum Sammeln von Kondensat, die einem nachfolgenden Effekt [1.(1+1)] zugeordnet ist, verbunden ist.

9. Mehrfacheffekt-Verdampfer nach einem der vorhergehenden Ansprüche, **dadurch gekennzeichnet, dass** er zwischen einem Effekt und dem anderen am Boden jedes Effekts (1.i) Leitungen (40) des "Sperrschleifen"-Typs, d.h. mit Siphonventil, hat, um die maximale Höhe des Überstaus des konzentrierteren Meerwassers zu regulieren.

10. Mehrfacheffekt-Verdampfer nach einem der vorhergehenden Ansprüche, **dadurch gekennzeichnet, dass** es am Ende des zweiten Durchlaufs des horizontalen Verdampfungsrohrbündels (8) wenigstens eines Effekts und vorzugsweise aller Effekte (1.i bis 1.n) eine kleine Kammer (12) zum Sammeln des restlichen Kondensats gibt, in dem auch die unkondensierbaren Elemente konzentriert sind, die entweder durch die in der genannten kleinen Kammer (12) befindlichen Löcher eliminiert werden oder im Fall des zweiten Effekts (1.2) vorzugsweise durch eine zweite Strahlpumpe (18) aus der genannten kleinen Kammer (12) abgesaugt werden.

11. Mehrfacheffekt-Verdampfer nach Anspruch 10, **dadurch gekennzeichnet, dass** die zweite Strahlpumpe (18) mit Teil des von der Dampfquelle (10) kommenden Speisedampfs (116) gespeist wird, der sie über ein Bypassrohr (19) erreicht, wobei ein Lüftungsverdampfer (20), der der zweiten Strahlpumpe (18) nachgeschaltet ist und mit Teil (22, 21) des zugefiihrten Meerwassers gekühlt wird, das restliche Kondensat sammelt und die von der zweiten Strahlpumpe (18) aus der genannten kleinen Kammer (12), vorzugsweise der kleinen Kammer (12) des zweiten Effekts (1.2), angesaugten unkondensierbaren Elemente an die Atmosphäre (24) ausstößt.

12. Mehrfacheffekt-Verdampfer nach Anspruch 6, **dadurch gekennzeichnet, dass** Teil des Kondensats aus der dem ersten Effekt (1.1) zugeordneten zweiten Kammer (13) zum Sammeln des Kondensats durch eine Leitung (114, 115) und eine jeweilige Kondensatpumpe (17) so entfernt wird, dass Teil des Kondensats zur Dampfquelle (10) zurückgesendet werden kann, bevor es zum ersten Effekt (1.1) gesendet wird.

13. Mehrfacheffekt-Verdampfer nach einem der vorhergehenden Ansprüche, wobei das Destillat oder Endprodukt, d.h. Süßwasser, durch eine Destillatpumpe (15) vom Boden des Kondensators (2) abgezogen wird, während die konzentrierte Salzlake vorzugsweise durch die Austragspumpe (26) aus dem letzten Effekt (1.n) entfernt wird.

14. Mehrfacheffekt-Verdampfer nach einem der vorhergehenden Ansprüche, wobei jedes Rohr des Rohrbündels (6, 6') des letzten Kondensators (2) und jedes horizontalen Verdampfungsrohrbündels (8) jedes Effekts (1.i) zu seiner Wartung oder seinem Auswechseln separat abgeschraubt/demontiert werden kann.

## Revendications

1. Evaporateur à effets multiples pour une production moyenne-faible de distillat, comprenant une seule tour d'évaporation composée d'un corps central (1) qui comporte un premier effet (1.1) à un effet final (1.n) et qui est disposé au-dessus d'un condenseur (2), les effets (1.1-1.n) étant superposés, chaque effet (1.i) comprenant globalement à l'intérieur un faisceau de tubes d'évaporation horizontaux (8) et un filtre (9) pour séparer les gouttes transportées par la vapeur, étant précisé qu'un dispositif de préchauffage (3.i) qui s'étend à la verticale et qui est associé à un effet respectif (1.i) est intégré dans la section verticale d'un conduit (29.i) pour transférer dans l'effet suivant [1.(1+1)] la vapeur générée dans l'effet (1.i) ; étant précisé par ailleurs que chaque dispositif de préchauffage (3.i) a une tête supérieure pour des raccordements d'entrée et de sortie (31, 31) de l'alimentation en eau de mer, et des faisceaux de tubes intérieurs verticaux (32) qui sont de préférence adaptés à la progression spatiale des parois des dispositifs de préchauffage (3.i) ; étant précisé que chaque dispositif de préchauffage présente par ailleurs - sur sa partie inférieure - une première chambre (34) pour recueillir le condensat de la vapeur condensée sur le faisceau de tubes verticaux (32),
**caractérisé en ce que**
- le conduit de transfert (29.i) est disposé à l'extérieur de l'enceinte (51) de l'évaporateur ;
- pour au moins un effet, mais de préférence pour tous les effets (1.1-1.n), un faisceau de tubes d'évaporation horizontaux (8) se compose de deux passages ou de "sous-faisceaux" asymétriques, c'est-à-dire d'un premier passage à plus grande section transversale et d'un second passage à plus petite section transversale, de préférence pour assurer une vitesse d'entrée globalement identique de la vapeur qui traverse les deux passages dans la direction inverse ou opposée ;
- l'évaporateur à effets multiples présente des plaques perforées, entre un effet et l'effet suivant, également composées de plusieurs parties (42a, 42b) pour faciliter l'entretien, par exemple lors de leur nettoyage, à l'aide de trous spéciaux avec des portes (43) pour enlever manuellement les boulons et écrous (60) sur les côtés des plaques perforées et à partir de l'extérieur, et pour les charger sur un chariot ou sur un tiroir (44) apte à être extrait latéralement, ou tout autre système apte à être extrait latéralement de l'enceinte (51) de l'évaporateur, sans que l'opérateur entre physiquement dans l'effet lui-même, qui peut donc être de petite taille.

2. Evaporateur à effets multiples selon la revendication 1, **caractérisé en ce qu'**il est prévu un éjecteur (11) qui utilise - comme fluide moteur - la vapeur fournie par la source de vapeur (10), par exemple une chaudière (10), pour aspirer (37 ; 144) une partie de la vapeur déchargée à partir du condenseur et/ou du dernier effet (1.n), et l'introduire avec le fluide moteur dans le faisceau de tubes d'évaporation horizontaux (8) du premier effet (1.1).

3. Evaporateur à effets multiples selon la revendication 1 ou 2, **caractérisé en ce que** pour réduire la hauteur du corps central (1) de l'évaporateur à effets multiples, la disposition des effets (1.1-1.n) est altnernée et excentrique par rapport au plan de symétrie vertical du corps central (1), dans la mesure où si le faisceau de tubes d'évaporation horizontaux (8) doit être déplacé vers la droite par rapport audit plan de symétrie vertical pour l'effet (1.i), le faisceau de tubes d'évaporation horizontaux (8) est alors déplacé vers la gauche du plan de symétrie vertical pour l'effet suivant [1.(i+1)] et pour l'effet précédent [1.(i-1)], s'il y en a un, tandis que pour le filtre (9) pour séparer les gouttes, c'est l'inverse ; une telle construction alternée plus compacte permettant d'empêcher des interférences entres les parties situées à l'extérieur de l'enceinte (51) du corps central (1), en particulier entre les conduits (29.1) pour transférer la vapeur d'un effet à l'autre.

4. Evaporateur à effets multiples selon l'une quelconque des revendications précédentes, **caractérisé en ce qu'**il présente des faisceaux de tubes d'évaporateur horizontaux (8), pour chaque effet individuel, qui ont une section transversale rectangulaire.

5. Evaporateur à effets multiples selon la revendication 4, **caractérisé en ce que** chaque section transversale rectangulaire a un rapport entre sa hauteur h et sa largeur b qui est supérieur à 1, de préférence h/b=3.

6. Evaporateur à effets multiples selon l'une quelconque des revendications précédentes, **caractérisé en ce que** les faisceaux de tubes d'évaporateur horizontaux (8) de chaque effet (1.i), sur le côté opposé à la position des dispositifs de préchauffage [3.1-3(n-1)], débouchent dans une seconde chambre respective (13) pour recueillir le condensat pour l'effet respectif (1.i) ; les secondes chambres (13) pour recueillir le condensat étant reliées entre elles en cascade grâce à des boucles d'étanchéité spéciales (117, 123, 133, 139).

7. Evaporateur à effets multiples selon l'une quelconque des revendications précédentes, **caractérisé en ce que** tous les tubes (106, 107, 108, 109) pour fournir l'alimentation en eau de mer, qui sont reliés aux différents raccordements d'entrée et de sortie (31, 31) de l'alimentation en eau de mer, qui sont disposés sur les têtes des dispositifs de chauffage [3.1 à 3.(n-1)] et qui mènent (109) finalement aux collecteurs portant des pulvérisateurs (7) pour pulvériser l'eau de mer sur le faisceau de tubes d'évaporation horizontaux (8) du premier effet (1.1), sont exclusivement disposés à l'extérieur de l'enceinte (51) du corps central (1) de l'évaporateur.

8. Evaporateur à effets multiples selon l'une quelconque des revendications précédentes, **caractérisé en ce que** chaque première chambre (34) pour recueillir le condensat, disposée en bas de chaque dispositif de préchauffage (3.i), est reliée par des conduits de distillat (33) à la seconde chambre (13) pour recueillir le condensat associé à un effet suivant [3.(i+1)].

9. Evaporateur à effets multiples selon l'une quelconque des revendications précédentes, **caractérisé en ce qu'**il a des conduits (40) du type "boucle d'étanchéité", c'est-à-dire avec une vanne à siphon, entre un effet et un autre, pour commander le niveau maximal de la tête d'eau de mer plus concentrée, en bas de chaque effet (1.i).

10. Evaporateur à effets multiples selon la revendication 1, **caractérisé en ce qu'**à l'extrémité du second passage du faisceau de tubes d'évaporation horizontaux (8) d'au moins un effet, et de préférence de tous les effets (1.1 à 1.n), il y a une petite chambre (12) pour recueillir le condensat résiduel dans lequel sont également concentrés les éléments incondensables qui sont éliminés par les trous prévus dans la petite chambre (12), ou de préférence aspirés à partir de ladite petite chambre (12) dans le cas du second effet (1.2) par un second éjecteur (18).

11. Evaporateur à effets multiples selon la revendication 10, **caractérisé en ce que** le second éjecteur (18) est alimenté avec une partie de la vapeur d'alimentation (116) qui provient de la source de vapeur (10) et qui y arrive par un tube de dérivation (19), étant précisé qu'un condenseur de ventilation (20) - disposé en aval du second éjecteur (18) et refroidi avec une partie (22, 21) de l'alimentation en eau de mer - recueille le condensat résiduel et rejette dans l'atmosphère (24) les éléments incondensables aspirés par le second éjecteur (18) dans la petite chambre (12), de préférence la petite chambre (12) du second effet (1.2).

12. Evaporateur à effets multiples selon la revendication 6, **caractérisé en ce qu'**une partie du condensat est éliminée de la seconde chambre (13) pour recueillir le condensat, qui est associée au premier effet (1.1) par un conduit (114, 115) et une pompe à condensat respective (17), de telle sorte qu'une partie du condensat puisse être renvoyée dans la source de vapeur (10) avant d'être envoyée dans le premier effet (1.1).

13. Evaporateur à effets multiples selon l'une quelconque des revendications précédentes, étant précisé que le distillat, ou un produit final, c'est-à-dire de l'eau douce, est soutiré du bas du condenseur (2) par l'intermédiaire d'une pompe à distillat (15), tandis que l'eau salée concentrée est de préférence éliminée du dernier effet (1.n) par l'intermédiaire de la pompe de décharge (26).

14. Evaporateur à effets multiples selon l'une quelconque des revendications précédentes, étant précisé que chaque tube du faisceau de tubes (6, 6') du condenseur final (2) et de chaque faisceau de tubes d'évaporation horizontaux (8) de chaque effet (1.i) peut être dévissé/démonté séparément pour leur entretien ou leur remplacement.
